(19) Europäisches Patentamt
European Patent Office
Office européen des brevets

(11) **EP 3 367 077 B1**

(12) **EUROPEAN PATENT SPECIFICATION**

(45) Date of publication and mention
of the grant of the patent:
**06.11.2019 Bulletin 2019/45**

(51) Int Cl.:
***G01J 5/00*** *(2006.01)* ***G01J 5/08*** *(2006.01)*
***G01J 5/02*** *(2006.01)*

(21) Application number: **18157188.6**

(22) Date of filing: **16.02.2018**

(54) **CONTINUOUS MEASUREMENT OF THE TEMPERATURE OF AN INDUSTRIAL PLANT TORCH**

KONTINUIERLICHE MESSUNG DER TEMPERATUR EINER INDUSTRIELLEN FACKEL

MESURE EN CONTINU DE LA TEMPERATURE D'UNE TORCHE INDUSTRIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2017 IT 201700022629**

(43) Date of publication of application:
**29.08.2018 Bulletin 2018/35**

(73) Proprietor: **Saras Ricerche e Tecnologie S.p.A.
09032 Assemini (CA) (IT)**

(72) Inventors:
• **ANEDDA, Alberto
09032 Macchiareddu (CA) (IT)**
• **SALIS, Marcello
09032 Macchiareddu (CA) (IT)**
• **MARCEDDU, Marco
09032 Macchiareddu (CA) (IT)**

(74) Representative: **Santi, Filippo et al
Barzanò & Zanardo Roma S.p.A.
Via Piemonte 26
00187 Roma (IT)**

(56) References cited:
**EP-A2- 0 129 150       EP-A2- 0 168 235
WO-A1-93/18494       CN-A- 101 701 850
US-A- 5 225 883**

• **Anonymous: "Work of IMPAC Infrared GmbH
Non-Contact Thermometry Pyrometer-
Pyrometer- Handbook Handbook", , 1 January
2004 (2004-01-01), XP055427799, Retrieved from
the Internet:
URL:https://www.researchgate.net/file.Post
FileLoader.html?id=571f235693553b01673c395
d&assetKey=AS:355035444727808@146165845
429 2 [retrieved on 2017-11-22]**

**Description**

The present invention concerns a method and an apparatus for continuous measurement of the temperature of an industrial plant torch.

The invention refers to the field of respect for environmental compatibility by industrial activities and in particular is aimed at monitoring the quality of emissions of an oil refinery.

Specifically, it is known that, in oil refineries, discharges coming from regulating valves or safety valves that prevent overpressure in the connected equipment, in the case in which normal process regulation is not sufficient, are collected in a reservoir network, called Blow-Down network. The gaseous substances conveyed in the Blow-Down Network are then burned in a torch.

According to the most recent best available techniques, in order to prevent atmospheric emissions from torch combustion, the use of torch combustion is only allowed for safety reasons or under extraordinary operating conditions (for example, start-up, shutdown operations). , etc.).

By their nature, the flow rates and compositions of the gaseous streams entered in the Blow-Down network are extremely variable and not predictable. The objective of measuring or estimating the combustion temperature of the torch, to verify that all potentially harmful compounds (for example PCDD, PCDF) are destroyed, is therefore particularly complex.

With regard to the techniques to prevent or reduce emissions from torch combustion, the best available cited techniques include continuous monitoring (measurement of the gas flow and estimation of other parameters) of the gas sent to the combustion in a gas torch and of the relative combustion parameters (eg content and calorific value of the gaseous mixture, coefficient of assistance, speed, percentage of the purge gas, pollutant emissions).

Apparatuses and methods for the monitoring of flames are known from US 5,225,883 or EP 0 168 235 A2. Moreover, the use of three or more wavelength components in the determination of a temperature is known from WO 93/18494 A1 or EP 0 129 150 A2.

The conclusions on the best available techniques imply the availability of measurement apparatuss for the composition of the Blow-Down gas, in order to estimate its calorific value and the presence of pollutants.

To take and analyze the gas samples of the Blow-Down different options are possible: sampling (manual or automatic) or continuous analysis (chromatographic analysis).

Manual sampling is based on the use of systems based on the use of sample sockets, engineered to guarantee the operator a sampling carried out in safety, without environmental emissions. The sample is then transported and analyzed in a chemical laboratory.

Automatic sampling is based on the use of systems based on programmable devices (for example a PLC), which perform a sampling at the occurrence of one or more plant conditions (for example an increase in the flow rate to Blow-Down, a system block, a request for the control system, etc.). The automatic systems also allow the consecutive collection of several samples. The samples are then transported and analyzed in a chemical laboratory.

The continuous analysis is based on the use of in-line analyzers for the determination of the sample composition, through a continuous system of sampling, transport and treatment of the sample itself. An analyzer, typically a gas chromatograph, determines the composition of the sample and makes it available to the control system.

The use of in-line gas chromatographs on Blow-Down is particularly laborious due to the high humidity of the sample, the extreme variability of the composition of the gas and the presence of substances that can easily dirt the instrument (salts, heavy hydrocarbons). The estimate of the combustion temperature, starting from the measured quantities, may also be incorrect due to the concomitant effect of several variables such as, for example, the dispersion vapor or the meteorological conditions.

In this context is inserted the solution according to the present invention, which proposes to provide a method of continuous measurement of the temperature of an industrial torch and, in particular, a refinery torch exempt from the limits of the known measurement methods and instruments.

These and other results are obtained according to the present invention by proposing a method and an apparatus which directly and continuously measures the combustion temperature of the torch, said method and said device being based on the use of a spectroscopic optical pyrometer, capable of providing not only an almost continuous reading of the flame temperature (1 reading/minute), but also to evaluate in real time the reliability of the measurement.

In particular, the image of the flame of the torch, captured by an efficient optical system, is sent to a spectroscopic analyzer; the data provided by the spectroscopic analyzer is processed and stored on an electronic processor. The alignment of the whole optical system is facilitated by a laser pointer and a camera that integrates the spectral information with the real image, as will be described later.

The aim of the present invention is therefore to provide a method of continuous measurement of the torch temperatures which allow to overcome the limits of the measurement methods and instruments according to the prior art and to obtain the above described technical results.

A further object of the invention is that said measurement method and instrument can be carried out with substantially lower costs compared to known continuous measurement systems, both as regards production and installation costs and as regards management costs.

Not the least purpose of the invention is to propose a method of continuous measurement of the torch temperatures that are simple, safe and reliable.

Therefore it is a first specific object of the present invention a method of continuous measurement of the temperature of an industrial plant torch as defined in claim 1.

Moreover it is a second specific object of the present invention an apparatus of continuous measurement of the temperature of an industrial plant torch as defined in claim 4.

Further features of the method and of the apparatus of continuous measurement of the temperature of an industrial plant torch are defined in the respective dependent claims.

It is evident the effectiveness of the measurement method and apparatus of the present invention, which allows to remotely and continuously determine the temperature of the flame of an industrial torch according to validation parameters.

The present invention will now be described, by way of illustration, but not by way of limitation, according to a preferred embodiment, with particular reference to some illustrative examples and to the figures of the attached drawings, in which:

- Figure 1 shows a block diagram of the assembly of the elements of an instrument of continuous measurement of the torch temperatures of a refinery according to the present invention,
- Figure 2 shows a diagram representing the variation of the transfer function of the overall optical system of Example 1 as a function of the wavelength, expressed in nm,
- Figure 3 shows the flame emission spectrum obtained from de-excitation processes of a molecular nature from the sample torch of Example 1,
- Figure 4 shows the emission spectrum from the black body obtained by emission of incandescent particulate from the sample torch of Example 1,
- Figure 5 shows the spectral distribution of atmospheric windows usable for an optical signal,
- Figure 6 shows the incandescent particulate spectra of a sample flame in conditions of Planck emission positioned with respect to a prototype of the measurer of the invention at a distance of 1 m, in laboratory, as explained in Example 3.1,
- Figure 7 shows the incandescent particulate spectra of a sample flame in conditions of Planck emission positioned with respect to a prototype of the measurer of the invention at a distance of 15 m, in field, in full sun, as explained in the example 3.1,
- Figure 8 shows at the top, the spectrum of light diffused by a cloudy background recorded by the meter prototype as described in Example 1 and the reconstruction of the base-line (thicker curve); below the net contribution obtained by the difference between the two signals,
- Figure 9 shows the transmission spectrum of water vapor,
- Figure 10 shows the molecular spectrum of the laboratory torch flame fed with a butane-air mixture, as obtained in Example 3,
- Figure 11 shows the molecular spectrum of the torch flame of a refinery, as obtained with the instrument described in Example 1,
- Figure 12 shows a comparison of the molecular spectrum shown in Figure 11 and of the absorption spectrum shown in Figure 9,
- Figure 13 shows a first flame spectrum recorded as indicated in Example 3.4 with traces of absorption from water vapor,
- figure 14 shows a second flame spectrum recorded as indicated in Example 3.4 with traces of absorption from water vapor higher than those of figure 13,
- Figure 15 shows a first flame spectrum as described in Example 3.4 (torch spectrum under prevailing Planck emission conditions),
- Figure 16 shows a second flame spectrum as described in Example 3.4 (torch spectrum under mixed emission conditions, Planck plus molecular),
- Figure 17 shows the spectral ranges useful for measurements in the region 800-1050 nm,
- Figure 18 shows different reconstructions of the spectral response $J(\lambda)_T$ of black body spectra of the measuring system of Example 1 for temperatures T comprised between 1000 and 2400 K as described in Example 4.2,
- Figure 19 shows the construction and the fit of the work curve $y(T)$ as described in Example 4.2,
- figure 20 shows a data sequence obtained by means of the instrument of Example 1 as described in Example 5.2,
- Figure 21 shows the result of the thermal analysis of the data sequence shown in Figure 20,
- Figure 22 shows the differences in the estimates between the temperatures of Figure 21 calculated by means of the equations (4.4) and (4.10) of the Example 5.2,

- Figure 23 shows a data sequence obtained by means of the instrument of Example 1 as described in Example 6.1.1,
- Figure 24 shows the result of the thermal analysis of the data sequence shown in Figure 23,
- Figure 25 shows a data sequence obtained by means of the instrument of Example 1 as described in Example 6.1.2,
- Figure 26 shows the result of the thermal analysis of the data sequence shown in Figure 25,
- Figure 27 shows a data sequence obtained by means of the instrument of Example 1 as described in Example 6.1.3,
- Figure 28 shows the result of the thermal analysis of the data sequence shown in Figure 27,
- Figure 29 shows the "screen-shot" of the graphical interface of Example 7 realized for the instrument management program of Example 1,
- Figure 30 shows the "Controls" sub-menu of Example 7, and
- Figure 31 shows the printing of the document as described in Example 8.

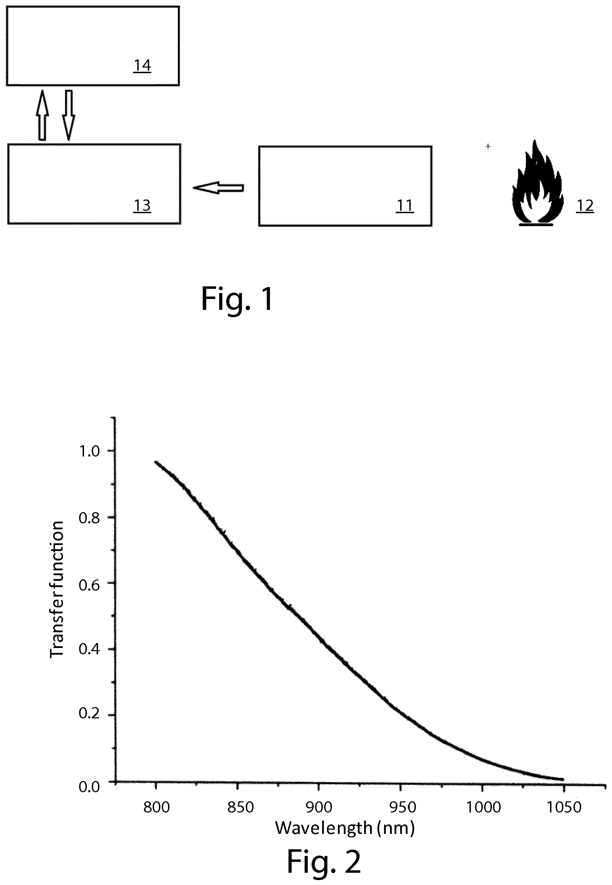

Making reference first to Figure 1, an apparatus of continuous measurement of the temperature of an industrial torch according to the present invention, indicated as a whole by reference numeral 10, comprises an optical system 11 for transferring the image of the flame 12 to the measuring system 13 composed of a spectroscopic analyzer equipped with a multichannel detector; as well as an electronic processor 14, connected to said measuring system by means of a cable or wirelessly, suitable for the management of the data acquisition procedures and the transmission thereof.

In particular, the transfer optical system 11 consists of a collection optic that, after being processed with a high pass filter, couples the image of the flame with the numerical opening of the spectroscopic analyzer equipped on the focal plane output with the multichannel detector.

The data provided by the spectroscopic analyzer is processed and stored in the electronic processor 14. The system can be equipped with a laser pointer and a chamber to facilitate alignment of the coupling optics 11 with the spectrograph and to integrate spectral information with the real image.

In the following examples the presence of the two possible mechanisms of flame light emission was discriminated: molecular emission and blackbody emission. Furthermore, the realization and development phases of a prototype of the measurement apparatus of the present invention are described in detail. In particular, the development was carried out starting from the analysis of the emission spectra of calibrated lamps and laboratory gas burners. In this phase it was possible to determine the extent of the interference deriving from the ambient light conditions.

Moreover, the prototype installed at the Sarroch refinery (CA) in Italy, was used to gather further information on atmospheric interferences, in particular, due to water vapor.

The analysis of the data collected during several months of testing allowed to select three spectral regions free from interferences due to water vapor and molecular phenomena.

As will be explained in detail in the examples, using two different methods of assessing the flame temperature, the instrument is able to discriminate the moments when the reading is not reliable. For example, strong gusts of wind can divert the flame out of the sighting range. The measures validated on the field are on average 70-80% of the total.

Example 1. Assembly of a prototype of an apparatus of continuous measurement of the torch temperatures and its calibration (in a controlled environment)

The determination of the flame temperature is based, essentially, on the optical coupling of its image with a dispersive apparatus which, through a suitable detector managed by an electronic processor (hereinafter referred to in the present description also by the acronym PC), allows its spectral analysis.

The block diagram of the experimental prototype (shown in Figure 1) of the measurement apparatus of the present invention realized according to the present example follows in principle the one used in the laboratory measurements under controlled environment, with the substantial modification of the collection optical system. In fact, while under laboratory measurement conditions, the optical system can be limited to a simple component, the collection of the image of the flame over long distances, as under operating conditions for the prototype realized according to the present example, makes it necessary the use of complex systems, which allow a fine control of the optical coupling (f/number, focal). The apparatus of continuous measurement of the torch temperatures of a refinery according to the present invention comprised an optical system 11, mounted on a three-axis micrometric movement system, which optically couples by means of a spectroscopic analyzer the image of the flame 12 with a multichannel detector.

The alignment of all the main optical components was guaranteed by their positioning on a low expansion coefficient optical bar. The signal collected was then transmitted to the PC 14, to be analyzed.

For the selection of the collection and detection optical system, the spectral region 800-1050 nm was considered for the reasons highlighted below.

For the spectral calibration of the entire measurement apparatus (10), the emissions of two calibrated lamps, OSRAM mod. Wi 14, were used, respectively indicated with the abbreviations Osram1 and Osram2. According to the calibration traces, the tungsten tape is brought to the temperature of 2400 K when the lamps, powered with 12,5 V d.c.. absorb, respectively, 15,9 A (Osram1) and 15,3 A (Osram2). The radiation emitted by the two lamps can be described as a gray body emission at a temperature of 2400 K.

Figure 2 shows the transfer function of the overall optical system that was obtained, following good laboratory practices, from the relation between the measured light intensity and that provided by Planck's law for a gray body at 2400K.

Preliminary thermal flame characterization tests were performed in the CGS laboratories of the University of Cagliari, on a 15 cm high sample flame generated by a torch that allowed to vary the stoichiometric ratio of the combustive (air) over the fuel (butane-propane); blue flame = stoichiometric combustion, yellow flame = combustion under oxygen deficiency.

In the first case (blue flame) we can speak of molecular emission (Boltzmann emission) in the second (yellow flame) of emission similar to that of black body (Planck emission).

Example 2. Installation of the prototype apparatus of Example 1 in a refinery

The prototype apparatus of continuous measurement of the torch temperatures calibrated in controlled environment of Example 1 was installed with fixed tracking in a special room made available at the SARAS refinery in Sarroch (CA), at a distance from the torch to be observed estimated at around 200 m. The meter, remotely controlled via a network connection, was kept active for four months, in the period between the end of winter and the beginning of summer. A video camera set to drive the optical system enabled visual monitoring of the torch simultaneously with the acquisition of spectra.

As will be shown in the following examples, the first results in the field have highlighted:

- excellent agreement, by means of Planck analysis, of the data collected in the field with the data obtained in the laboratory;
- negligible effect on the determination of the temperature due to optical pollution during the daytime hours;
- possibility of estimating a minimum operating temperature in flame conditions totally free of Planck emission component (molecular emission only);
- impossibility of using in the field of molecular spectroscopy in the NIR area due to the presence of water vapor absorption, the contribution of which, given the position of the refinery along the coast, was strongly dependent on the prevailing winds.

This last point required an in-depth analysis of the influence of the optical absorption bands of water vapor in the spectral range involved in the measurement of temperature.

Example 3. Analysis of the flame spectrum

The tests carried out allowed to highlight two different combustion reactions.

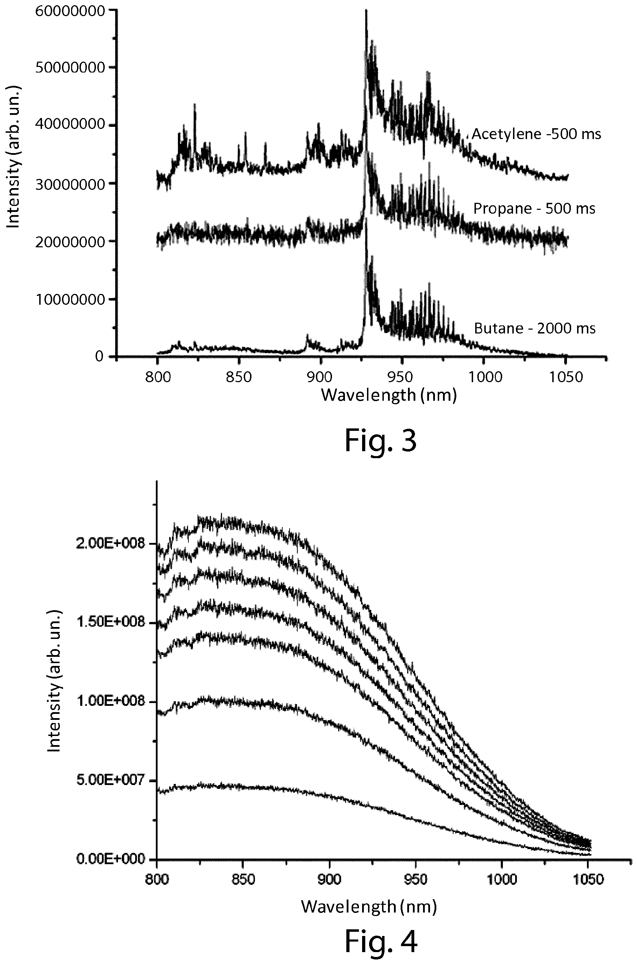

In particular, conditions were found in which the contribution to the flame light emission could come from different fuels of interest in refineries due to molecular de-excitation processes (Figure 3, striped spectra) or to emission by incandescent particles (soot), (figure 4, continuous spectra from "black" body emission).

In both cases, however, the methods developed for the thermal characterization of the flame assume a uniform temperature of the observation region.

Based on this assumption, justified objections can be made taking into account both the considerable spatial and temporal variability of the flame and the changeable conditions of combustion. The spectrum mediated during the observation time must then be interpreted as the superposition of a plurality of spectra, each characterized by its own temperature.

Therefore, the temperature that is deduced from an analysis of the data thus acquired must be considered as an effective temperature of the flame on whose value the hottest components have greater weight.

To conduct a thermal analysis of the flame spectrum it is necessary to consider spectral regions free from optical contaminations or at least wherein spurious contributions can be easily removed. In this regard, optical absorption of the various atmospheric gases and light pollution which may overlap the flame emission spectrum are to be considered optical contaminations.

In this phase it has to be noted that the spectral range of the near infrared (NIR) was mainly considered, but it is obvious that the same procedures can also be applied in other spectral regions for which some considerations are necessary.

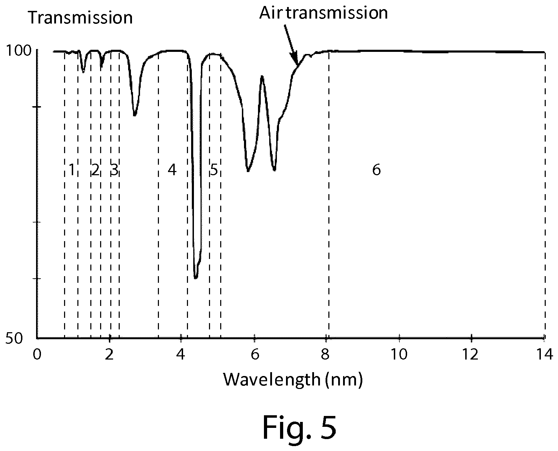

The main causes of infrared (IR) perturbation are mainly associated with the absorption of water vapor, the extent of which depends on its concentration along the crossed optical path. As shown in Figure 5, for this compound, for wavelengths of less than 3000 nm, in the atmosphere, transparency windows that can be effectively used can be found, around 1000 nm at 1300 nm and at 1600 nm. The subsequent windows above 3000 nm require the use of photodetectors with lower efficiency, which make the detection of an optical signal more problematic. The detectors usable for the optical signal, in the various windows shown in Figure 5, are the following: for the window indicated by the numerical reference 1, silicon (Si); for window 2, germanium (Ge) or arsenide of indium and gallium (InGaAs); for window 3, lead sulphide (PbS); for window 4, lead selenide (PbSe), pyroelectric or thermopile detectors; for windows 5 and 6 pyroelectric or thermopile detectors.

Compatibly with the conditions of atmospheric transparency, of light pollution and of optical signal quality, it is convenient to operate in the range of lower wavelengths, wherein the emissivity shows less variability, to the detriment, however, of the component of the level of the continuous optical signal emitted , which decreases when the temperature of the incandescent body decreases. Based on these considerations and on the state of the art of commercially available detectors, the trade-off for the determination of temperatures above 600 °C is obtained with the optical survey in the NIR region 800-1050 nm.

Example 3.1. Analysis of the flame spectrum in the presence of light pollution

To ascertain the degree of disturbance on the light pollution signal due to the surrounding environment, the image of the flame has been collected from the above-mentioned apparatus prototype both in laboratory and in field. The spectra obtained with different accumulation times were processed in real time with the subtraction of an appropriate base-line corresponding to the spectral contribution of the light diffused from the sky ("background").

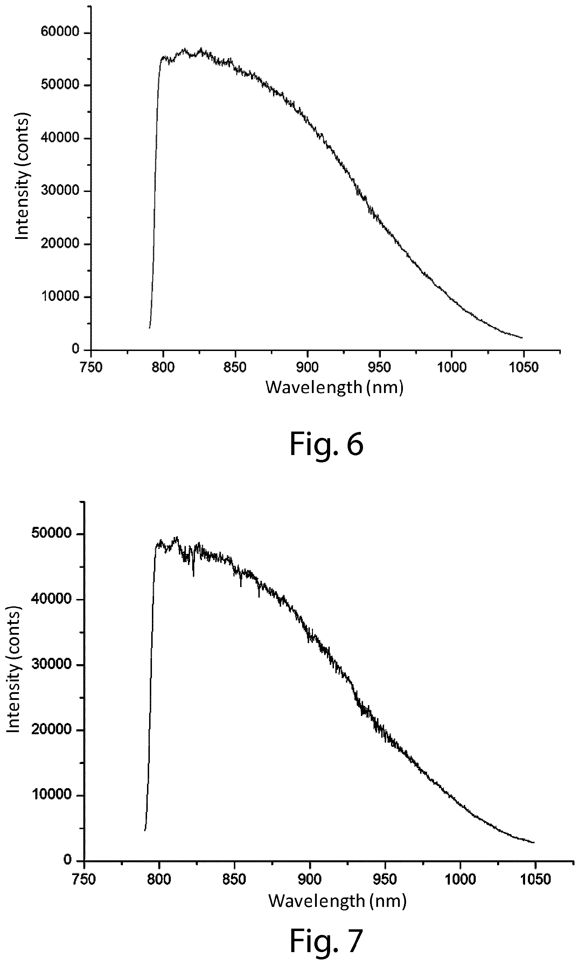

Figures 6 and 7 show, respectively, two spectral recordings of the sample flame in conditions of Planck emission positioned with respect to the apparatus prototype at a distance of 1 m in the laboratory and at a distance of about 15 m on the field, in condition of full sun.

The identical spectral trend of Figures 6 and 7 clearly shows that the realized apparatus prototype is highly sensitive to the signal of a weak flame even in conditions of strong light pollution and, therefore, is suitable for the collection of the optical signal of interest.

Numerous subsequent tests also confirmed the possibility of obtaining significant measurements even with different weather conditions.

Example 3. Analysis of the flame spectrum in the presence of water vapor in the atmosphere

The tests on the field have shown that, in particular atmospheric conditions, a source of disturbance in the thermal analysis of the flame spectra, in the NIR 800-1050 nm interval, could reside in the optical absorption of the water vapor present in the atmosphere.

According to the Lambert law, the intensity of absorption of the water vapor characteristic bands depends on its concentration in the atmosphere, as well as on the distance of the light source from the detector. It is evident that this is a random disorder, heavily dependent on weather conditions.

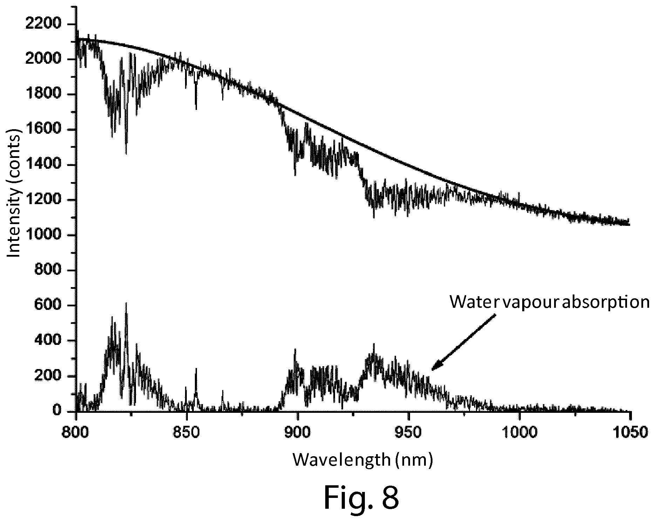

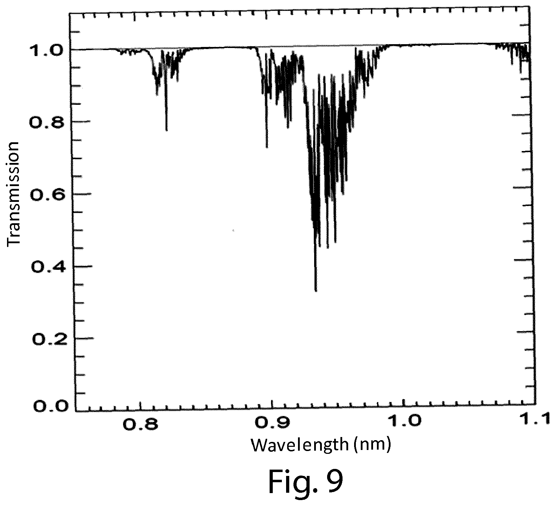

To estimate the weight, a spectrum of light scattered by the passing clouds was collected on the observation line of the meter prototype described in Example 1. In particular, Figure 8 shows: at the top, the experimental spectrum of the light diffused by a cloudy background and the reconstruction of the base-line (thicker curve); below the net contribution obtained from the difference between the two signals. The subtraction of an appropriate base-line that corresponds to the spectral contribution of the light diffused from the sky, the "background", has allowed to highlight the contribution of different absorption bands which, on the basis of literature data (Applied Optics 23, 1853- 61, 1984) is, unequivocally, to be attributed to the presence of water vapor (Figure 9).

It is important to note that, in the spectral range under examination, around 805 nm (very narrow band), in the 860-890 nm range and over 1000 nm, windows with low optical activity can be identified (absorption), while the spectral regions 810-870 nm and 890-1000 nm are characterized, instead, by a low optical transmission.

Example 3.3. Analysis of the flame spectrum in the presence of molecular emission

The study carried out on laboratory flames originating from light hydrocarbons (Figure 3, Example 3), highlighted the presence of a spectral group of rotovibrational lines in the NIR region, potentially usable for the determination of the flame temperature. In particular, the identified spectral group which develops in the interval 954-984 nm, has characteristics apparently independent of the hydrocarbon used in the combustion (propane, butane, acetylene). This peculiarity, at first sight unfavorable, would allow the determination of the flame temperature regardless, within certain limits, of the fuel.

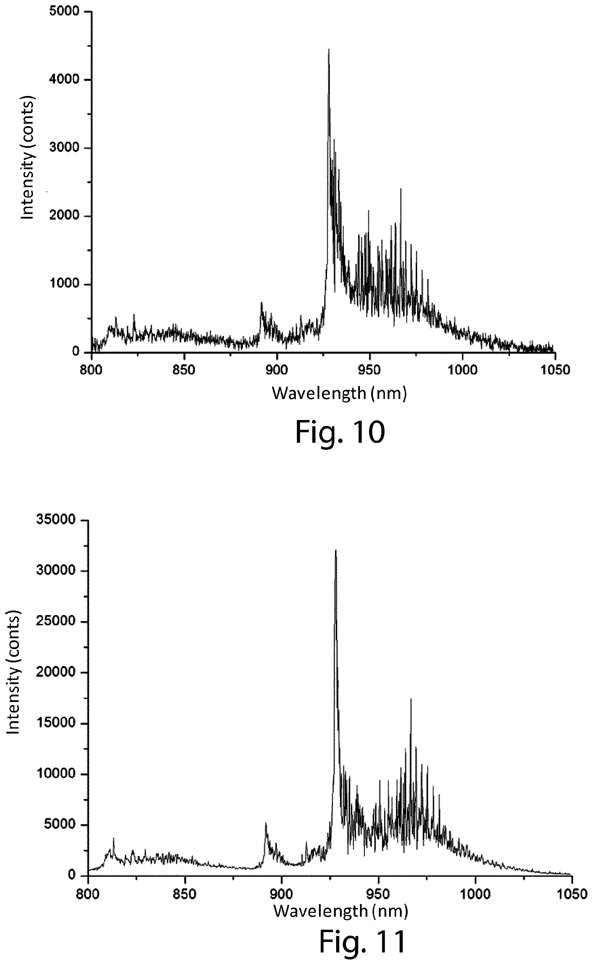

In the flame spectrum obtained from a butane-air mixture in the laboratory with the apparatus described in Example 1 (Figure 10) a coherent sequence of rotovibrational lines was identified whose modeling by the standard Boltzmann procedure allowed to estimate rotational temperatures of the flame compatible with those expected from the theoretical model of adiabatic temperature.

The uncertainties on the deduced values remained around 100 °C due to the small variations on the actual intensity values of the characteristic lines compared to those deduced with the comparison with an ideal Boltzmann curve.

This occurrence highlighted, however, that even a small variation in the intensity of the lines in the coherent sequence used could induce a notable error in the estimation of the rotovibrational temperature of the flame, making it unreliable.

It can also be noted that the NIR region itself affects the water vapor absorption lines as described in Example 3.2.

In order to evaluate the possible effects of this overlap, figure 11 shows the flame spectrum of the torch of Sarroch refinery with the instrument described in Example 1. The spectra of Figure 10 and of Figure 11 are not correct with the transfer function of the system.

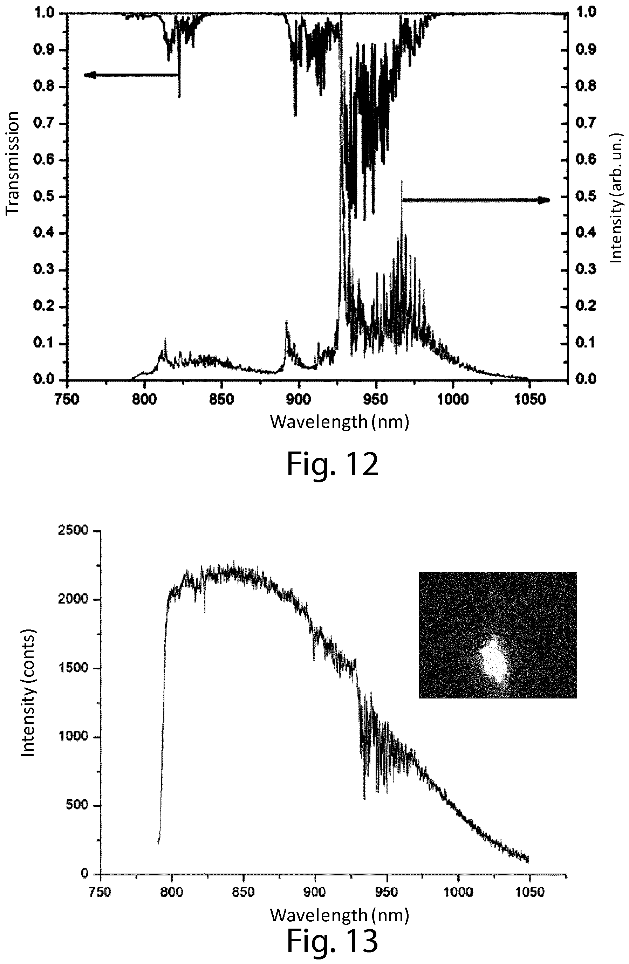

The difference of the two spectra is very marked around 950 nm, in correspondence of the spectral zone of maximum absorption of water vapor: 890-1000 nm (Example 3.2). In detail, Figure 12 compares the molecular spectrum shown in Figure 11 with the absorption spectrum of water vapor (Figure 8); the selective decrease induced on the intensity of the rotovibrational lines, particularly accentuated in the spectral zone 930-975 nm, is evident, rendering a Boltzmann analysis of the data detected in the field ineffective and invalid.

The subsequent campaigns of measures carried out at SARAS have confirmed the impassability of this road; nevertheless, on the basis of the data collected with the laboratory torch, it can be stated that the occurrence of these molecular spectra indicates the presence of a flame region characterized by a temperature typically higher than 1800 K (J.S. Kim, M.A. Capelli J. Appl.Phys. 84, 4595 (1988), D. Carinhana et al. J. Braz. Chem. Soc. 19.1326 (2008)).

Although the considered spectral group, to our knowledge, has not yet been classified in the technical-scientific literature, it has been identified a constructive law of the spectral positions of the lines congruent with the experimental data. Based on these data and making use of some assumptions on the properties of rotovibrational transitions, flame temperature determinations were made for the various hydrocarbons considered. In particular, with regard to the model torch, fed with propane/butane and air mixtures, temperatures between about 1800 K and 2100 K were found, according to the flow and premix conditions. The thermodynamics provides, for the type of flame considered, an adiabatic temperature of $\approx$2250 K (stoichiometric composition of the mixture for the complete combustion of hydrocarbon). The deviations between the temperature values estimated from the experimental data and the theoretical one (for a specific composition of the mixture) are, undoubtedly, to be mainly attributed to the experimental conditions of the observed combustion (percentage of the single comburants, stoichiometry of the combustion process). Having said that, however, the contribution of a possible systematic error due to the simplifications introduced in the working hypothesis can not be excluded. They refer mainly to the assumptions for the model of molecular transitions and to the oscillator forces which, together with the Boltzmann factor, determine the relative intensity of the lines within a rotovibrational sequence.

Example 3.4. Analysis of the flame spectrum in the presence of black body emission

The thermal characterization of the flame was carried out by hypothesizing that its incandescent carbon particulate matter (soot) is similar to a black body with a uniform temperature in the observation region.

With regard to the hypothesis of assimilability to a black body, it is reasonable to assume that the large volumes of carbon particulate matter, such as those present in the torch under examination, behave as absorbers, for which it is sufficient, but not essential, to assume that the emissivity, in the explored spectral region, is weakly dependent on wavelength.

To conduct a thermal analysis of the incandescent spectrum it is also necessary to consider spectral regions free from contamination (atmospheric windows Figure 5), or at least wherein spurious contributions can be easily removed. In this regard, both water vapor absorption and molecular emission, which may overlap the black body emission spectrum, are to be considered as contaminations.

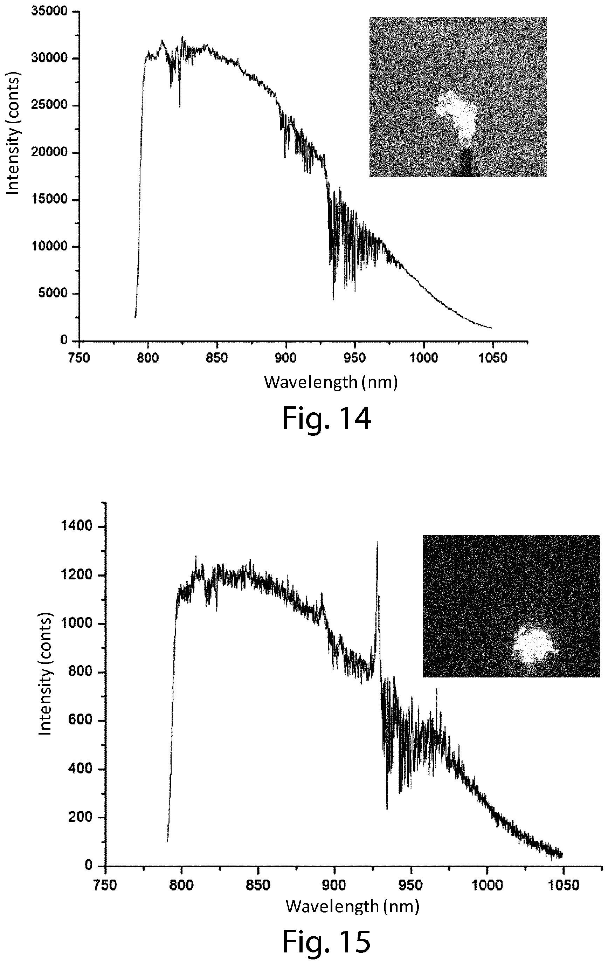

By way of example, Figures 13 and 14 show two spectra recorded on different days with evident signs of absorption from water vapor. Moreover, both spectra present negligible signals of molecular emission. It can be seen that the recording of Figure 14 has a more marked absorption signal than that shown in Figure 13.

Having Example 3.3 clearly shown that the molecular investigation can not be usefully applied for the purpose of the present invention, it was still to be determined whether the presence of molecular components, in addition to the absorption from water vapor, would make the Planck analysis of the flame spectrum still suitable to be used.

The history of the data collected during the observation campaign showed that, with integration times of 50 ms, the peak of the molecular spectrum did not exceed the few thousands of counts.

Thus, when present, the molecular spectrum is relevant, at most, if the incandescent one recorded by the measurement apparatus also remains within a few thousand counts per channel.

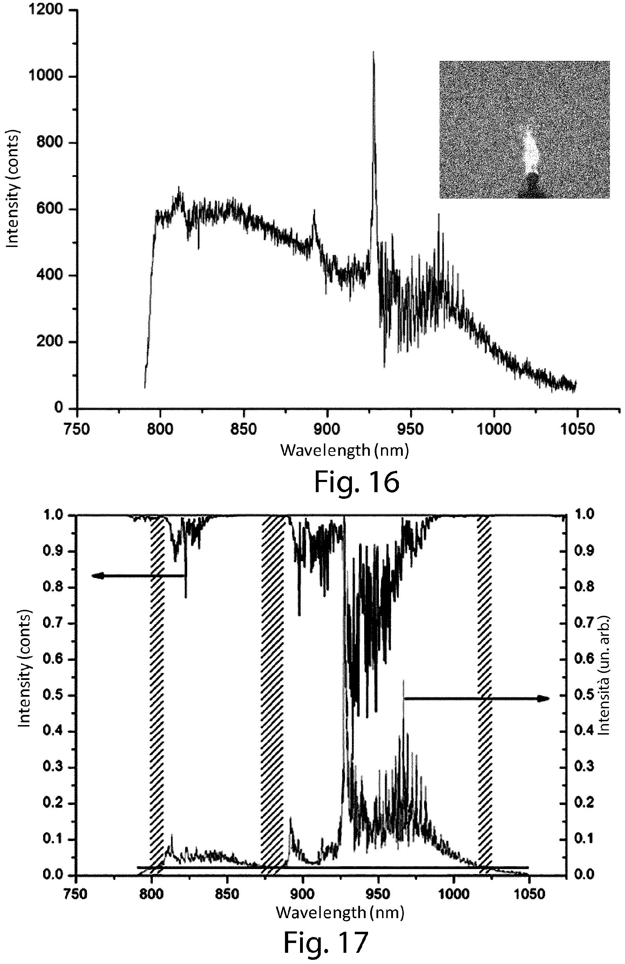

Examples showing both the spectral characters, the incandescent one and the molecular one, are shown in Figures 15 and 16. In particular, Figure 15 shows a torch spectrum in predominantly Planck emission conditions, while Figure 16 shows a torch spectrum under conditions of mixed emission, Planck plus molecular.

It should be stressed, once again, that the presence in the torch spectra of the two contributions, indicates that, in the region observed by the measurement apparatus, there are zones with different combustion regime. It should be noted that in Figure 15 the incandescent component prevails, while in Figure 16 a prevalence of the molecular component is observed.

Example 4. Method of thermal analysis

Example 4.1. Search for spectral regions free from contamination

The experimental evidences obtained on the field show that an analysis based on the emission of black body for the determination of the flame temperature must necessarily disregard the possible contribution of spectral contaminations. These, if neglected, can lead to considerable errors in the estimation of the temperature regardless of the technique used (optical pyrometers and thermographs) and the non-uniformity of the emitter. It is clear that this consideration is not reflected in the fact that the flame can have a completely or even predominantly molecular character. In the present case, the most important spectral "pollutant" is linked to the presence along the optical path from the torch to the water vapor detection system, which is a source of strong and variable optical activity (absorption).

Based on these considerations, the useful spectral ranges in the 800-1050 nm region can be found around 805, 880 and 1020 nm (as shown in Figure 17). In fact, these ranges are not completely free of contamination, because they may be affected by a small background due to molecular emission. In a first approximation, this spurious contribution can be neglected, since the induced error is largely contained within the uncertainty of the measure. However, in order to pursue a more conservative approach, it can be seen that in the identified spectral areas, the basic contribution is almost the same and, therefore, easily eliminated during data processing.

Example 4.2. Comparison of models

In the more general case, the luminous intensity of the flame at a generic wavelength will be given by the sum of two contributions: that of incandescent particulate, radiation of black body at temperature T, and that deriving from the molecule de-energizing $F(\lambda)$, spectrum of rotovibrational emissions. Taking into account the distance between the light source and the collection and detection device, the emission at the mouth of the torch will also be mediated by the transmittance of the optical path traveled. In analytical terms it is possible to write:

equation (4.1)

$$I(\lambda)_T = \left[\frac{2\pi hc^2}{\lambda^5}\left(\frac{1}{e^{\frac{hc}{\lambda kT}} - 1}\right) + F(\lambda)\right][1 - A(\lambda)] \qquad (4.1)$$

wherein $F(\lambda)$ represents the contribution of molecular emission, $A(\lambda)$ the water vapor absorption and $[1 - A(\lambda)]$ the transmittance), h is the Planck constant, c is the speed of light and k is the Boltzmann constant. The value recorded by the spectrometer $J(\lambda)_T$ is given by the equation (4.2)

$$J(\lambda)_T = RI(\lambda)_T \qquad (4.2)$$

wherein $R$ is the transfer function of each measuring arrangement (collection optic, spectrograph and detector) as defined in Example 1. Equation (4.1) does not consider the background due to light pollution coming from the light diffused from the sky (background) because in ideal conditions the flame is opaque (total absorber). In reality, sometimes the morphology of the flame is jagged (or simply moved) and is such as to allow the accidental collection of a contribution due to the environmental background (as will be discussed in Example 6).

Furthermore, it should be noted that the comment given to the molecular background observed in the useful spectral regions shown in Figure 17 is valid in consideration of equation 4.2.

In principle, equation 4.1 would allow to determine the Planck effective temperature of the recorded spectrum provided that the incandescent and molecular components are separated and the contribution due to the water vapor absorption is eliminated. This operation presents arbitrariness that makes it unreliable.

It is possible, however, to renounce to separate the various components of the spectrum and to look for spectral regions wherein the contaminations originated by the molecular emission and, above all, by the absorption are minimal or negligible. So, for example, once two wavelengths are identified in spectral regions that have negligible spurious contributions, the ratio of their intensities, corrected by the transfer function of the optical system, is given by:

$$\frac{I(\lambda_1)_T}{I(\lambda_2)_T} = \left(\frac{\lambda_2}{\lambda_1}\right)^5 \frac{e^{\frac{hc}{\lambda_2 kT}} - 1}{e^{\frac{hc}{\lambda_1 kT}} - 1} \qquad (4.3)$$

from which, by means of the approximation of Wien, it is obtained:

$$T \approx \frac{hc}{k}\left(\frac{1}{\lambda_1} - \frac{1}{\lambda_2}\right)\left[ln\left(\frac{\lambda_2^{\ 5} I(\lambda_2)_T}{\lambda_1^{\ 5} I(\lambda_1)_T}\right)\right]^{-1} \qquad (4.4)$$

Always with the limits highlighted in the choice of the three spectral ranges, alternatively, an empirical method is proposed based on the construction of a work curve starting from an emission curve obtained from a source at a known temperature.

Be $\lambda_1$, $\lambda_2$ and $\lambda_3$ three wavelengths belonging to the spectral ranges considered in Figure 17, wherein $\lambda_3 > \lambda_2 > \lambda_1$ and $J(\lambda_3)_T$ $J(\lambda_2)_T$ and $J(\lambda_1)_T$ the respective intensity at a temperature T recorded by the measuring arrangement; the measuring system will record the intensity of the calibrated source (T=2400 K) according to the

$$J(\lambda)_{2400} = R \cdot I(\lambda)_{2400} \qquad (4.5)$$

wherein $J(\lambda)_{2400}$ represents the distribution of the intensity of the source at 2400 K as collected by the measuring system, $R$ the transfer function of each optical system as defined in the Example 1 and $I(\lambda)_{2400}$ the theoretical Planck emission curve of the calibration source at 2400 K.

On this basis it is possible to reconstruct the spectral response $J(\lambda)_T$ of the measuring system, account being taken of the specific transfer function $R$, for each temperature $T$ of the source by means of the relation:

$$J(\lambda)_T = J(\lambda)_{2400}\frac{I(\lambda)_T}{I(\lambda)_{2400}} = RI(\lambda)_T \qquad (4.6)$$

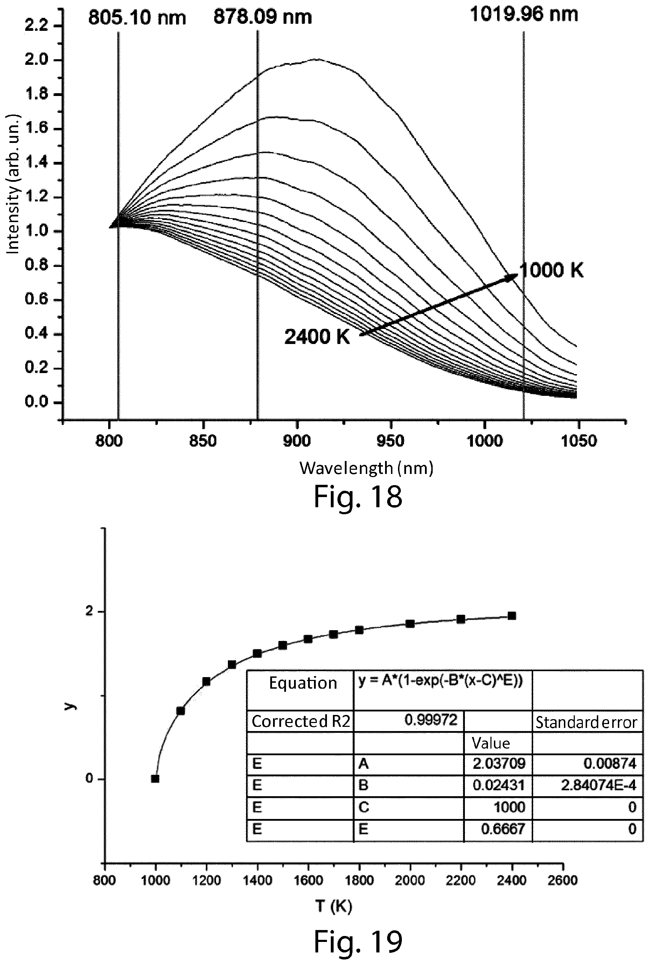

Figure 18 shows the reconstructed spectral response $J(\lambda)_T$ of the black body spectra of the measuring system of Example 1 for a temperature T comprised between 1000 and 2400 K, obtained by means of the equation (4.6).

Once the ratio:

$$f(T) = \left(\frac{J(\lambda_1) - J(\lambda_2)}{J(\lambda_1) - J(\lambda_3)}\right)_T \qquad (4.7)$$

depending on the temperature, is defined, and the function

$$y(T) = f(T) - f(T_0) \qquad (4.8)$$

in which the values of $f(T)$ are deducted from the spectra reconstructed by means of the (4.6); assuming, per ease of calculation, $T_0$=1000K, the values $y(T)$ shown in Figure 19 are obtained, the trend of which for the measuring system in Example 1 is described, with excellent consistency, by a function of the type:

$$y(T) = A\left\{1 - e^{-\left[B(T-T_0)^{2/3}\right]}\right\} \qquad (4.9)$$

From which it is obtained, by means of inversion

$$T = T_0 + \left[\frac{1}{B}\ln\left(\frac{A}{A - y(T)}\right)\right]^{3/2} \qquad (4.10)$$

### Example 5. Data processing

The field data collection was carried out by extracting from the flame spectra three intensity values $J(\lambda_1)_T$, $J(\lambda_2)_T$ e $J(\lambda_3)$, respectively at wavelengths $\lambda_1$ = 805,10 $nm$, $\lambda_2$ = 878,09 $nm$ e $\lambda_3$ = 1019,96 $nm$, within the useful spectral ranges of the region 800-1050 nm. The first (short term) was based on values obtained from the average of five spectra recorded consecutively with 50 ms accumulation time; the second (extended term) considered the values obtained by continuously sampling the spectra collected in the three channels for about 7 minutes.

### Example 5.1. Short term mode

As a first example of application of equations (4.4) and (4.10), with relative comparison of results, Table 1 has been constructed, which collects the data recorded between the months of March and May, during the measurement campaign carried out on site.

Table 1

| Date; time | $J(\lambda_1)_T$ 805,10 $nm$ | $J(\lambda_2)_T$ 878,09 $nm$ | $J(\lambda_3)_T$ 878,09 $nm$ | y(T) | T (°C) eq. (4.10) $\lambda_1$805,10 $nm$ $\lambda_2$878,09$nm$ $\lambda_3$1019,96 $nm$ | T (°C) eq. (4.4) $\lambda_1$805,10 $nm$ $\lambda_2$878,09 $nm$ |
|---|---|---|---|---|---|---|
| 5-03-13; 14:20 | 10504 | 9868,6 | 2204 | 1,73284 | 1413 | 1413 |
| 6-03-13; 14:50 | 26433,2 | 26283 | 4466,4 | 1,66312 | 1309 | 1359 |
| 6-03-13; 18:15 | 5112 | 5244 | 1599 | 1,61871 | 1252 | 1313 |
| 8-04-13; 19:14 | 7254 | 6843 | 1771 | 1,73124 | 1416 | 1433 |
| 8-04-13; 19:15 | 4575 | 4492 | 1513 | 1,68339 | 1338 | 1323 |
| 8-04-13; 19:16 | 5038,2 | 4573,4 | 1497,2 | 1,78754 | 1529 | 1434 |
| 10-04-13; 16:11 | 14597,8 | 13084 | 2520,2 | 1,78162 | 1516 | 1513 |
| 10-04-13; 16:12 | 4332,6 | 3794,8 | 1349,2 | 1,83655 | 1658 | 1569 |
| 10-04-13; 16:15 | 2802,6 | 3070,6 | 1378,8 | 1,46805 | 1107 | 1101 |
| 10-04-13; 16:16 | 4682,4 | 4674,6 | 1529,8 | 1,65876 | 1303 | 1322 |
| 10-04-13; 16:17 | 2238,2 | 2374 | 1266,6 | 1,51651 | 1147 | 1089 |
| 29-04-13; 15:22 | 22295,2 | 20219,4 | 3340,8 | 1,7658 | 1482 | 1527 |
| 29-04-13; 15:26 | 23230,4 | 20270,6 | 3297,6 | 1,80477 | 1571 | 1582 |
| 3-05-13; 14:20 | 10504 | 9868,6 | 2204,4 | 1,73284 | 1419 | 1412 |
| 9-05-13; 22:04 | 23860,8 | 21339,6 | 3477 | 1,77997 | 1512 | 1539 |
| 9-05-13; 22:07 | 22601,8 | 20286,6 | 3414,2 | 1,77694 | 1506 | 1513 |
| 9-05-13; 22:08 | 8996,8 | 7930,6 | 1894,8 | 1,80641 | 1575 | 1512 |
| 9-05-13; 22:09 | 26182,2 | 23623,4 | 3800,2 | 1,77061 | 1492 | 1517 |
| 14-05-13; 13:08 | 9146,8 | 8243,2 | 1985,8 | 1,78246 | 1518 | 1448 |

It can be seen that there are sequences with very variable temperature (e.g. 10-04) and relatively stable sequences (e.g. 9-05). This is due to the conditions of the flame, which can be jagged and variable or compact and stable, and to wind conditions (calm or strong gusts). As a result, it may happen that hot flame zones or cooling marginal areas may appear in the instrument's target line during measurement.

Example 5.2. Extended term mode

Continuous thermal analysis was considered of the signals collected in the three channels at the wavelengths $\lambda_1$ = 805,10 *nm* $\lambda_2$ = 878,09 *nm* and $\lambda_3$ = 1019,96 *nm* for a time interval of about 7 minutes.

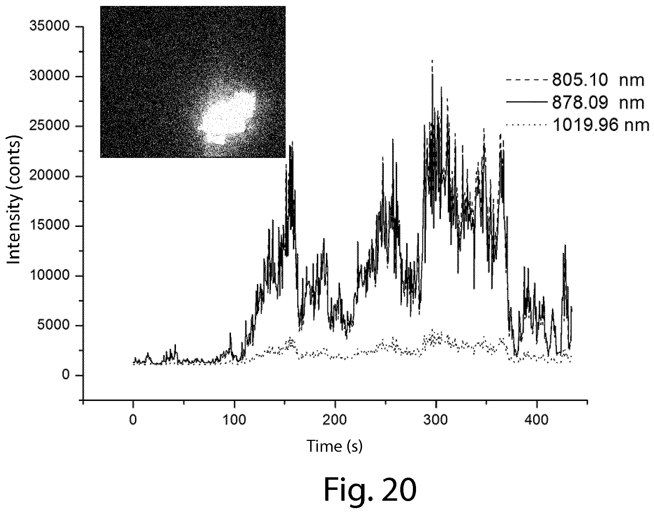

Initially, the sequence of data collected on 25/05 at 22:36 was examined and shown in Figure 20. For this reason the problem of pollution of the background signal, practically nil at night, does not arise.

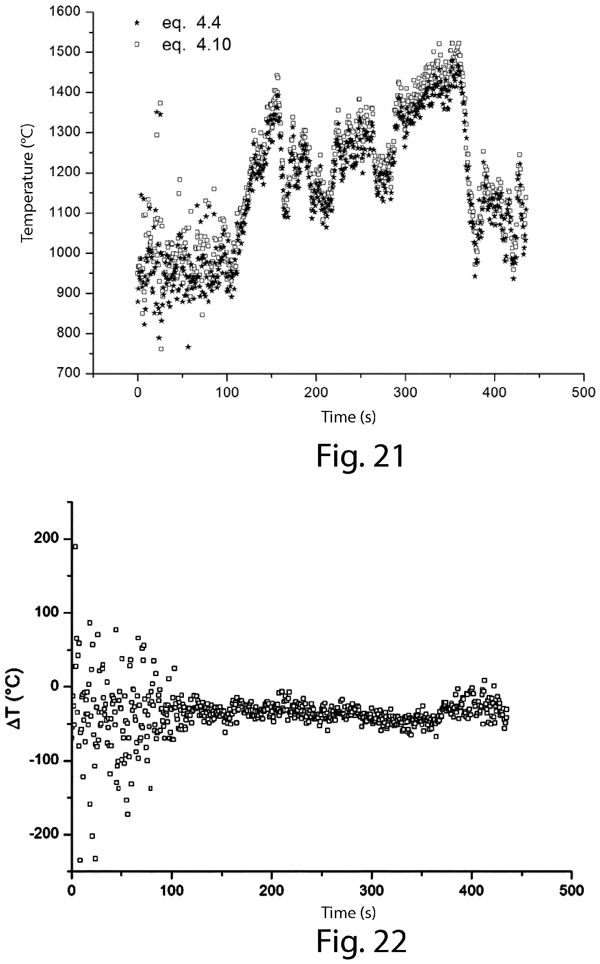

In the first 100 seconds, it is noted that the values of the three signals are very low; due to the wind, the measurement apparatus direction of observation touches the flame, collecting signals from colder marginal areas. Referring to Figure 21, the temperatures calculated with equation (4.4), indicated with stars, and those calculated with equation (4.10), indicated with squares, show, in fact, low values around 950 °C and a high scattering of results. Subsequently, again referring to Figure 21, the flame seems to better match the aim of the measurement apparatus, recording higher temperatures, between 1100 °C and 1500 °C. Reasonably, the explanation of these temperature jumps is that the more peripheral areas, which the instrument points to when the flame is moved by the wind, are those in the process of cooling down.

The differences between the temperature values obtained by applying the equations (4.4) and (4.10) are shown in Figure 22. Due to the low signal recorded in the first 100 seconds, significant differences can occur between the two methods, although most of the points registers a deviation of less than 100 °C. On the other hand, when the signal collected shows an important number of counts (Figure 22), the temperature deviations are less than 10-20 °C.

Example 6. Data validation

As shown in the example above, the simple application of equations (4.4) and (4.10) can produce meaningless temperature values due to data sequences with low signal levels and/or important background levels. However, it may also occur that this signal is "polluted" by molecular flame emissions that provide a particularly rich and intense striped spectrum in the 920-980 nm region. As shown in Figure 3.3, although a Boltzmann analysis in the NIR region could not provide a reliable temperature estimate, the presence of these characteristic striped spectra denotes a flame zone with a minimum temperature above 1800 K.

On this basis, it was therefore appropriate to develop algorithms that would allow to automatically select from the data collected the prevailing type of emission (black body, molecular, mixed black body + molecular) and to indicate a temperature with a justified criterion of reliability.

Example 6.1. Validation procedure under blackbody emission conditions

The idea behind this algorithm is to add a fixed number of counts to the channels of the recorded spectrum, which is smaller, but comparable with the level of counting on the "most polluted" channel.

In practice, based on the data collected in the measurement campaigns carried out in the refinery, the light diffused by a cloud fully illuminated by the sun at 2:00 p.m. produces a "pollution" on the 805.1 nm channel in the order of 2500 counts (integration times of 50 ms). By adding, for example, a number of counts = 500 on the three examined channels of the spectrum, the temperature obtained from the equation (4.10) would not change, since it operates on the difference between channels, while that obtained through the equation (4.4), would take the form:

$$T \approx \frac{hc}{k}\left(\frac{1}{\lambda_1} - \frac{1}{\lambda_2}\right)\left[ln\left(\frac{\lambda_2{}^5}{\lambda_1{}^5}\frac{I(\lambda_2)_T + \delta_2}{I(\lambda_1)_T + \delta_1}\right)\right]^{-1} \qquad (6.1)$$

wherein $\delta_1$ and $\delta_2$ represent the value of the increment corrected with the instrument transfer function. In conditions of low count, the used offset contributes to significantly diverging the estimated temperature values with the two equations; while when the signal coming from the flame exceeds the background by a few thousand counts, the two estimates converge on values close to each other, making the calculated temperatures significant and, therefore, validating them. From an operational point of view, the temperature that can be attributed to the torch as an effective temperature equal to the arithmetic mean of the two validated values.

Example 6.1.1. Application of the validation procedure in black-body emission conditions

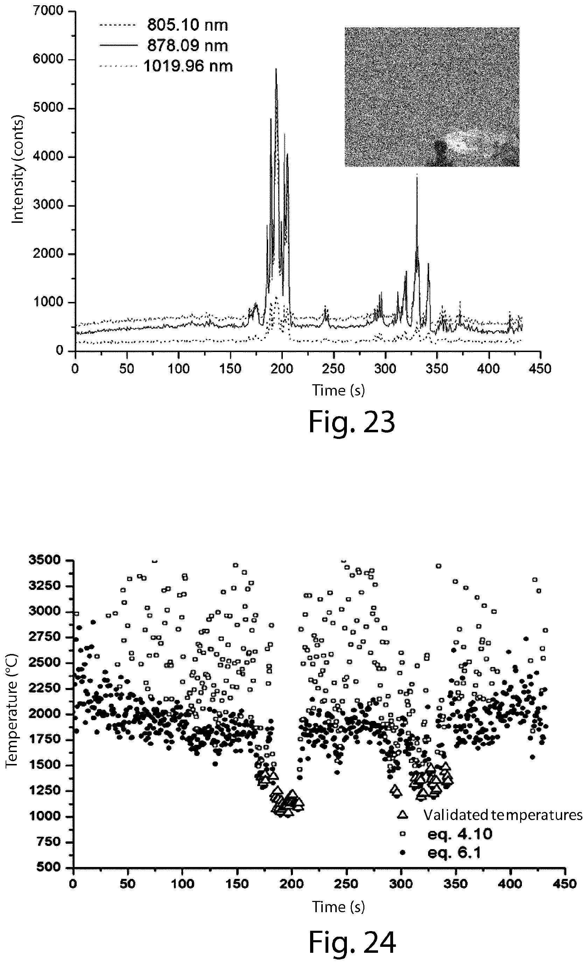

As the first example of application of the validation procedure elaborated, in the Example 6.1 the sequence of data recorded on the day 23/05 starting at 5:03 (Figure 23) was examined. From the considerable variation in the intensity of the signal in the three channels, it is clear that only sporadically, due to the gusts of wind, the line of sight of the instrument intercepts the flame.

In Figure 24, in which the empty squares indicate the temperatures estimated according to equation 4.10 and the solid circles indicate the temperatures estimated according to equation 6.1, it is shown that processing the collected data produces very discordant temperature values (even 1500 °C) except at times when the observation line of the measurement apparatus crosses the flame. This occurrence is verified with an intense signal that occurs around the 200s and 325s. In these cases, the temperatures obtained with the two methods converge on similar values that can be easily identified.

As a working hypothesis that can be made more or less stringent depending on the type of torch and the installation site, a statistic can be considered sufficient to validate 70% of the temperatures calculated with equations 4.10 and 6.1. In example 2 all those measurements that produce a difference of less than 80 °C between the temperatures calculated with equations 4.10 and 6.1 are validated.

The result obtained is shown in Figure 24, while the empty triangles indicate the effective flame temperature deduced from the points, calculated with equations 4.10 and 6.1, which satisfy the validation condition $\Delta T$ <80 °C.

Example 6.1.2. Application of the validation procedure in black-body emission conditions

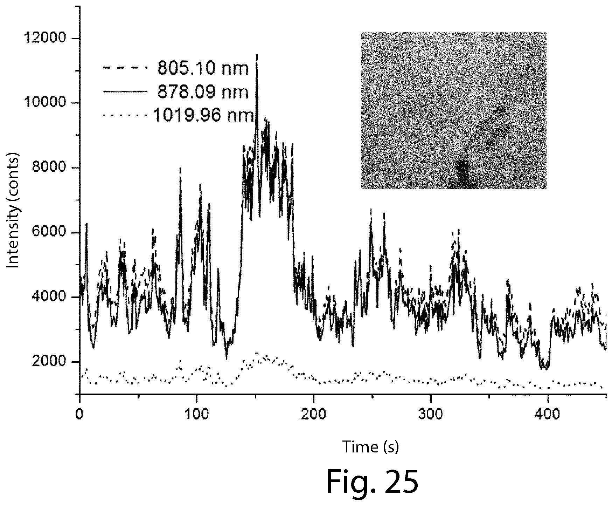

As a further example, the sequence recorded starting at 14:21 on 24/05 is analyzed, monitoring three spectrometer channels at wavelengths 805.10; 878.09 and 1019.96nm, which is shown in Figure 25.

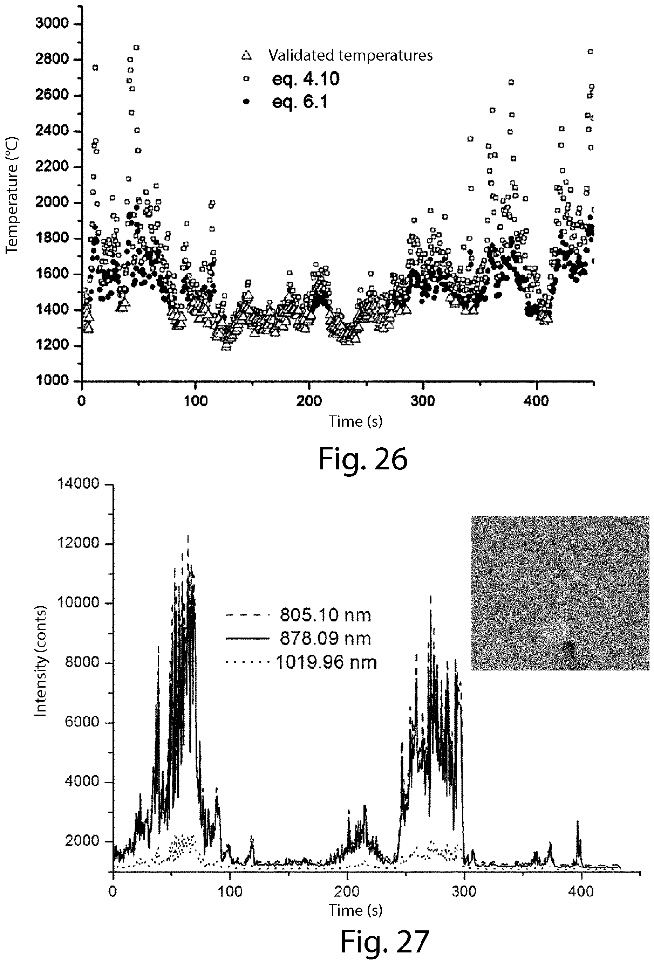

The temperatures estimated by applying equations 4.10 and 6.1 are shown in Figure 26. Using the same criteria described in Example 8.2, those converging values were selected within 80 °C. In particular, in Figure 26 the empty squares indicate the temperatures estimated according to equation 4.10 and the full circles those estimated according to equation 6.1. The empty triangles indicate the temperatures ($\Delta T$ <80 ° C) validated according to the values obtained from equations 4.10 and 6.1. The comparison with the previous case shows how the addition effect is more important when the background signal is more relevant (the estimate with equation 6.1 produces a higher leveling of the temperatures).

Example 6.1.3. Application of the validation procedure in black-body emission conditions

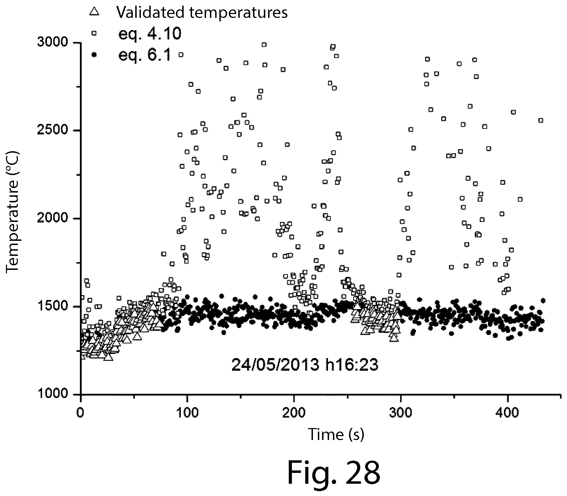

Finally, to complete the case studies found throughout the campaign of measurements carried out on the site, the case of a non-compact flame was considered. In these surveys, carried out at the date of 24-05 starting from 16:23 and reported in Figure 27, there are significant signals around 50s and 275s of elapsed time. The comparison of the two estimates obtained through equations 4.10 and 6.1 allows to detect which are the reliable measures according to the set validation criterion ($\Delta T$ <80 °C). The result attained is shown in figure 28, whereas the empty squares indicate the temperatures estimated according to equation 4.10 and the full circles those estimated according to equation 6.1. The empty triangles indicate the temperatures ($\Delta T$ <80 °C) validated from the values obtained from equations 4.10 and 6.1, which satisfy the imposed condition.

Example 6.2. Validation procedure under molecular emission conditions

The idea behind this algorithm is to index the spectrum of a purely molecular emission in order to evaluate its weight in a flame spectrum that has both contributions (blackbody emission and molecular emission).

The typical spectrum of a purely molecular emission, Figure 10 and Example 3.3, indicates the presence of a flame characterized, according to the literature (J.S. Kim, M.A. Hair J. Appl.Phys. 84, 4595 (1988); D. Carinhana et al. J. Braz. Chem. Soc. 19.1326 (2008)), by an effective temperature higher than 1800 K.

Figures 15 and 16 show, instead, the spectrum of flames with contribution of emissions from both molecular and black bodies: in particular in Figure 16 the intensity of the characteristic molecular resonance at about 928.0 nm with respect to the maximum emission value of black body (about 850.0 nm) shows the predominantly molecular character of this flame.

In the cases of figure 15 and of figure 16 it is therefore possible to determine two temperatures corresponding to the two zones of the flame (6.1 black body emission and molecular emission> 1800 K), leaving the uncertainty on which of the two emissions gives the most important contribution to the effective flame temperature.

In order to objectify the recognition of the prevailing combustion process, an algorithm has been developed that allows to "weighten" the relative importance of the two phenomena.

By indicating with $J(\lambda_{max})_T$ the intensity of the more intense molecular peak and with $J(\lambda_{min})_T$ the lower intensity recorded in the immediate vicinity (max 5 nm) of $\lambda_{max}$, but susceptible of being affected by a possible contribution from black body emission, it is possible to define a parameter Q given by:

$$Q = \frac{J(\lambda_{max})_T - J(\lambda_{min})_T}{\text{...}} \qquad 6..2$$

The value of which is $\approx 1$ in the case of flame with only molecular emission, $J(\lambda_{min})_T \approx 0$ (Figure 10), $Q \approx 0$ in case of flame with only black body emission $J(\lambda_{max})_T \approx J(\lambda_{min})_T$ (Figures 6 and 7).

If the two combustion processes are present at the same time, the flame spectrum will, trivially, be the sum of the molecular emission spectrum and of the black body emission spectrum. In these conditions, the value of $J(\lambda_{min})_T$ will be determined by the value that is due to the emission of the black body and the parameter Q can, therefore, vary continuously from 0 to 1.

Example 6.2.1. Application of the validation procedure under mixed emission conditions

By using in Equation 6.2 the intensities deduced from the flame spectrum reported in Figure 15, a parameter Q of about 0.4 is obtained for that emission, giving the flame a predominantly black body emission character. Its effective temperature will therefore be better represented by that obtained with a Planck analysis (equation 6.1) equal to 1750K.

By using in Equation 6.2 the intensities deduced from the flame spectrum reported in Figure 16, a parameter Q of about 0.7 is obtained for that emission, giving the flame a predominantly molecular emission character. As highlighted in Example 3.3, its effective temperature can not be measured reliably but will certainly be higher than 1800 K, in accordance with the value of 1878 K calculated with a Planck analysis (equation 6.1).

Example 7. Development of a control software of the measurement apparatus

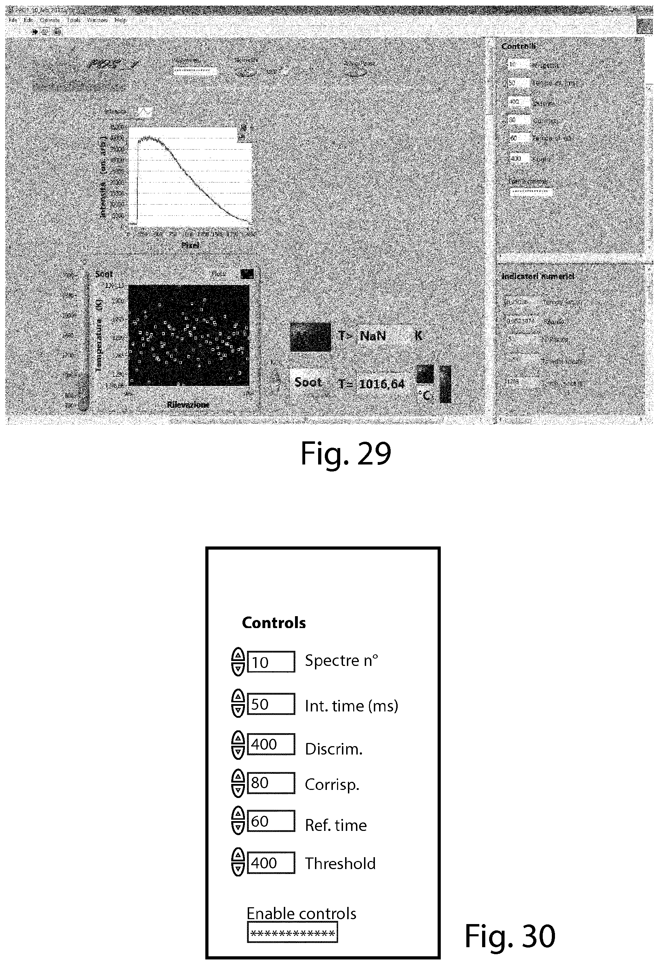

To allow the user to extract information on the temperature of the torch, a software configured to provide an elementary and intuitive graphical interface was implemented (Figure 29). This allows:

- password access to the files for loading the data to be analyzed and saving the final result;
- the input by password of the calculation parameters established in default through a "Controls" submenu;
- viewing the data processed;
- the temperature estimated according to the analytical method (4.4) and empirical (4.10);
- the average temperatures obtained, point by point, from those previously obtained considering only the points that have passed the validation criterion.

The default parameters, determined on the basis of the characteristics of the apparatus and the place of installation, are set in a section accessible by password ("Controls").

Figure 30 shows the "Controls" submenu with, in brackets, the default parameters used for the apparatus of example 1 installed at the Sarroch refinery:

1. N. spectra: the number of spectra on which to calculate an average for each temperature calculation (= 10);
2. Time int. (ms): time to acquire a single spectrum (50 ms);
3. discrim. (counts): offset $\delta$ added to the channels $\lambda_1$ e $\lambda_2$ (400 cts);
4. Corresp. (° C): determines the condition for the validation of the temperatures calculated using equations 4.10 and 6.1 ($\Delta T \leq 80$ °C);
5. Time ref. (s): cycle duration (60 s)
6. Threshold (counts): number of minimum counts to start data processing (400 cts)
7. Enable controls: access password.

This procedure recognizes as reliable temperatures those for which the difference between the determinations of the two methods mentioned above is lower than the validation parameter (correspondence: in figure 29 set at 80 °C). All points that have passed the matching check are considered in the calculation of the average temperature (°C). The default parameters are established after analyzing the data collected during a campaign of observations whose duration depends on the characteristics of the installation and the type of system; typically one or two months.

Example 8

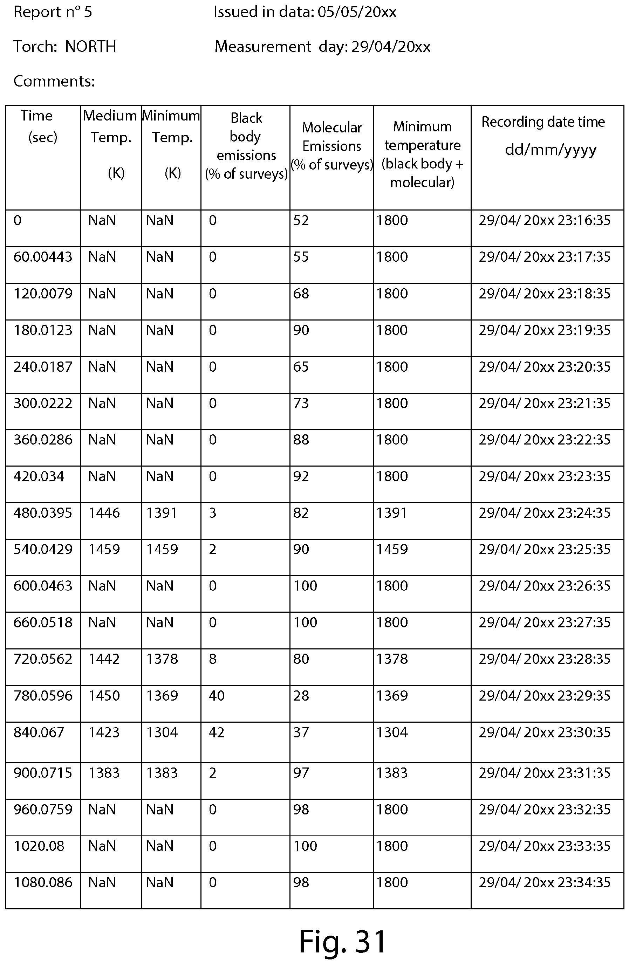

All the collected data are stored in a .txt file and can subsequently be processed in a document (Figure 31) whose characteristics are the terminology used and the measurement specifications.

The terminology includes the following definitions:

Time: time elapsed since the beginning of the first survey (instant t = 0) of the daily sampling;
Average temperature: average temperature between the useful data collected within one minute of sampling;
Minimum temperature: minimum soot temperature recorded during the sampling minute.
Soot events: combustion events with black body optical emission (yellow/red flames).
Molecular events: combustion events with optical emission of molecular nature (light blue/blue flames).
Minimum temperature (soot + molecular): shows in a column the minimum soot temperature, if detected, or the molecular one (1800 K: as explained in the following).
NaN: temperature not available because of rejected measurement (out of match).

As far as the measurement specifications are concerned, the measurement is carried out automatically over 24 hours. The sampling interval is 1 minute, at the end of which the data of average temperature, minimum temperature, fraction of positive soot events, fraction of molecular events, date and time of sampling are produced. In case of excess of molecular events or insufficiency of positive soot events, the measurement is rejected (NaN).

Occasionally, only one event may be detected per minute. In this case, the minimum temperature is not detected or coincides with the average temperature.

The percentages shown in the frequency columns are rounded to the nearest integer number. The percentages shown do not add to the unit as they relate to non-exclusive events.

The collected data are updated every minute and saved in a text file that collects the measurements taken within 24 hours.

The measure is rejected in the following cases:

1) Insufficiency of positive soot events: flame not centered on the measurement area due to wind intensity and direction; torch off or very little intense
2) Excess of molecular events: the emission spectrum of the torch in the observation region is dominated by molecular emissions, which is why the effective temperature is certainly higher than 1800 K.

The prototype apparatus of continuous measurement of the torch temperatures installed at the Sarroch refinery can also be controlled remotely for all operations involving data acquisition. This can be done by connecting to the computer 14 associated with the prototype of example 1, where the spectroscopic analyzer control software is installed.

Conclusions

The above examples allowed to operate on the field a prototype apparatus dedicated to measuring the temperature of an industrial torch flame. In the specific case, the torch operated at the refinery in Sarroch (CA), which is located in a coastal area with strong winds predominating from NO (mistral) and SE (sirocco).

In a classification of flames according to the flow regime, two main categories can be distinguished:

- laminar flames, characterized by a well defined flame zone and regular surface
- turbulent flames, characterized by an irregular flame zone and jagged surface

The latter, in turn, can be divided into:

- diffusive flames, in which comburent and fuel are introduced separately
- premixed flames, in which the chemical reaction is subsequent to the mixture between the comburent and the fuel.

In all these cases the volume enclosed by the flame surface shows a different temperature gradient. The field measurements showed that for the flames, at the mouth of the chimney, all the types recalled could randomly be present; this depended mainly on the combustion processes in progress and on the weather factors linked to the location of the plant.

In the absence of any reference in the bibliography currently available, it has been therefore introduced the concept of "effective temperature" of a flame to indicate that temperature value which, inserted in the Planck equation, eventually corrected for the emissivity, or in a model derived from it, allows the best analytical representation of experimental data.

All the surveys have shown the necessity of the introduction of this concept that allowed to give a significant estimate of the torch temperature even under "continuous" monitoring conditions. On this last aspect it is appropriate to clarify the meaning to be given to the expression "in continuous".

The measurement method implemented allowed, in laminar flame conditions, the determination of its temperature every 50 ms; in the presence of gusts of wind, very frequent at the site, the flame surface shifted from the instrument's sight line recording very low signals or attributable to external areas of the flame in the cooling phase. In both cases, the temperature values deduced were not indicative of the actual combustion process in progress.

The lack of fast and reliable optical tracking remote systems on the market involved the development of an original acquisition method which, over the five months of measurement, provided significant temperature data with interruptions for a maximum time period of about 180 s.

The apparatus of continuous measurement of the torch temperatures of a refinery, according to the present invention, allows the setting of all the acquisition parameters remotely, without limits of distance between the location of the instrument and the location of the data collector, and does not need any special measures for its operation. Taking into account the hostile environment in which it is called to operate, the only routine maintenance operations are the cleaning of the front optics and the periodic control (on a six-monthly basis) of its calibration.

The results achieved highlighted that the spectroscopic emission of a refinery flame was strongly dependent on the substances introduced into the Blow-Down network.

In particular, a black-body spectrum associated with the presence of incandescent carbon particulate or a molecular spectrum due to the emission of the excited hydrocarbon molecules, which could be traced back to flame-related temperatures around 1200 K and above 1800 K., can be highlighted. The most common occurrence suggested the presence of both spectral emissions. The choice of wavelengths range 800-1050 nm (NIR), allowed to characterize both emission regimes with sufficient resolution.

The opportunity of using particular NIR spectral regions, explained in Examples 3, 3.3, 3.4 and 8, is amply confirmed by field surveys.

The relevant points that emerge from the above observations regard the considerable variability of the flame (both in the spatial and spectral sense), the water vapor absorption and the light pollution due to the diffused sunlight. Beyond these environmental aspects, the instrumental performances appear suitable for the purpose, even in the absence of sophisticated tracking devices for the control of the tracking system.

On the basis of the results obtained, the analysis of the incandescent spectrum is confirmed as the only viable path for the thermal investigation of the flame even in the presence of various sources of disturbance, which do not allow a trivial direct Planck analysis of the light emission. The results presented are made reliable by the application of an appropriate methodology developed but which, however, must be carefully evaluated; a flame, in general, and the flame of the torch in particular, is considered a dynamic system, whose temperature can not be defined if not in a accurate manner. This intrinsic limitation does not diminish the need to have an evaluation of "its" temperature in terms of "effective temperature" which, although not exhaustive in absolute terms, is able to provide an immediate indication of the combustion process in progress.

The present invention has been described by way of illustration, but not by way of limitation, according to its preferred embodiments, but it is to be understood that variations and/or modifications may be made by those skilled in the art without departing from the relative scope of protection, as defined from the attached claims.

**Claims**

1.  Continuous measurement of the temperature of an industrial plant torch, comprising the following steps:

    - selecting three wavelengths $\lambda_1$, $\lambda_2$ and $\lambda_3$, wherein $\lambda_3 > \lambda_2 > \lambda_1$, in spectral regions where possible contamination arising from any incandescent components, from a possible molecular emission and from the absorption of water vapor, are very low or negligible;
    - for each selected wavelength $\lambda_1$, $\lambda_2$ and $\lambda_3$, measuring the respective intensity $J(\lambda_3)_T$ $J(\lambda_2)_T$ e $J(\lambda_1)_T$ emitted by a calibrated source having a known temperature, according to the

$$J(\lambda)_{Tcal} = R \cdot I(\lambda)_{Tcal} \qquad (4.5)$$

    wherein $J(\lambda)_{Tcal}$ represents the distribution of the intensity of the calibrated source at the known temperature as it is collected by the specific measuring system used, $R$ the transfer function of the specific optical system used and $I(\lambda)_{Tcal}$ the theoretical Planck emission curve of the calibrated source;
    - reconstructing the spectral response of the specific measurement system for any temperature T of a source to be measured, by means of the relation:

$$J(\lambda)_T = J(\lambda)_{Tcal}\frac{I(\lambda)_T}{I(\lambda)_{Tcal}} = RI(\lambda)_T \qquad (4.6)$$

- defining the relationship, depending on the temperature:

$$f(T) = \left(\frac{J(\lambda_1) - J(\lambda_2)}{J(\lambda_1) - J(\lambda_3)}\right)_T \qquad (4.7)$$

- defining the function

$$y(T) = f(T) - f(T_0) \qquad (4.8)$$

in which the values of $f(T)$ are deducted from the spectra reconstructed by means of the (4.6);
- defining the function that best describes the trend of the values $y(T)$ as a function of the temperature T;
- deriving the temperature T by inversion of the function of the trend of the values of $y(T)$.

2. Continuous measurement of the temperature of an industrial plant torch according to claim 1, **characterized in that** it comprises a validation procedure, comprising the following steps:

- selecting two wavelengths $\lambda_1$ and $\lambda_2$, in spectral regions where possible contamination arising from any incandescent components, from a possible molecular emission and from the absorption of water vapor, are very low or negligible;
- for each selected wavelength $\lambda_1$ and $\lambda_2$, measuring the respective intensity $J(\lambda_1)_T$ and $J(\lambda_2)_T$ emitted by the source of which the temperature has to be evaluated, as collected by the specific measuring system used;
- evaluating the intensity of emission at the mouth of the torch, as the inverse of the relation:

$$J(\lambda)_T = RI(\lambda)_T \qquad (4.2)$$

wherein $R$ is the transfer function of the specific optical system used;
- determining the temperature by means of the relationship:

$$T \approx \frac{hc}{k}\left(\frac{1}{\lambda_1} - \frac{1}{\lambda_2}\right)\left[ln\left(\frac{\lambda_2{}^5 I(\lambda_2)_T + \delta_2}{\lambda_1{}^5 I(\lambda_1)_T + \delta_1}\right)\right]^{-1} \qquad (6.1)$$

wherein h is the Planck constant, c is the speed of light, k is the Boltzmann constant and $\delta_1$ and $\delta_2$ represent a value of the increase of the number of counts, respectively for the selected wavelengths $\lambda_1$ and $\lambda_2$, corrected by means of the transfer function of the specific measurement apparatus used.

3. Continuous measurement of the temperature of an industrial plant torch according to claims 1 and 2, as an arithmetic mean of the temperature values respectively calculated according to claim 1 and according to claim 2.

4. Apparatus (10) for continuous measurement of the temperature of an industrial plant or refinery torch according to the method of claims 1-3, comprising an optical coupling system (11), i.e. a system of lenses and/or mirrors and optical fiber cables, and a spectroscopic analyzer provided with a multichannel detector, as well as an electronic processor (14), apt to the management of the data acquisition procedures and of the storage and transmission of the same, in connection with said spectroscopic analyzer to enable the passage of data.

5. Apparatus (10) for continuous measurement of the temperature of an industrial torch according to claim 4, **characterized in that** the optical coupling system (11) consists of a collection optic coupling the image of the flame (12) of the torch, previously processed with a high pass filter, at the numerical opening of said spectroscopic analyzer, equipped with said multichannel detector at the output focal plane.

6. Apparatus (10) for continuous measurement of the temperature of an industrial torch according to any one of claims 4 - 5, **characterized in that** it comprises a laser pointer and a camera apt to facilitate the alignment of said optical coupling system (11) with said spectroscopic analyzer and to integrate spectral information with the real image.

**Patentansprüche**

1. Kontinuierliches Messverfahren der Temperatur einer industriellen Anlagenfackel, umfassend die folgenden Schritte:

   - Auswählen von drei Wellenlängen $\lambda_1$, $\lambda_2$ und $\lambda_3$, wobei $\lambda_3 > \lambda_2 > \lambda_1$, in Spektralbereichen, in denen mögliche Verunreinigungen, entstehend aus jeglichen glühenden Komponenten, aus einer möglichen molekularen Emission und aus der Absorption von Wasserdampf, sehr gering oder vernachlässigbar sind;
   - für jede ausgewählte Wellenlänge $\lambda_1$, $\lambda_2$ und $\lambda_3$, Messen der durch eine kalibrierte Quelle mit einer bekannten Temperatur emittierten jeweiligen Intensität $J(\lambda_3)_T$ $J(\lambda_2)_T$ e $J(\lambda_1)_T$ gemäß der Beziehung

$$J(\lambda)_{Tcal} = R \cdot I(\lambda)_{Tcal} \qquad (4.5)$$

   wobei $J(\lambda)_{Tcal}$ die Verteilung der Intensität der kalibrierten Quelle bei der bekannten Temperatur, wie sie durch das verwendete spezifische Messsystem erfasst wird, $R$ die Transferfunktion des verwendeten spezifischen optischen Systems und $I(\lambda)_{Tcal}$ die theoretische Planck-Emissionskurve der kalibrierten Quelle darstellt;
   - Rekonstruieren der Spektralantwort des spezifischen Messsystems für jede Temperatur T einer zu messenden Quelle mittels der Beziehung:

$$J(\lambda)_T = J(\lambda)_{Tcal} \frac{I(\lambda)T}{I(\lambda)Tcal} = RI(\lambda)_T \qquad (4.6)$$

   - Definieren der Beziehung, in Abhängigkeit von der Temperatur:

$$f(T) = \left( \frac{J(\lambda_1) - J(\lambda_2)}{J(\lambda_1) - J(\lambda_3)} \right)_T \qquad (4.7)$$

   - Definieren der Funktion

$$y(T) = f(T) - f(T_0) \qquad (4.8)$$

   in der die Werte von $f(T)$ mittels der Beziehung (4.6) von den rekonstruierten Spektren abgezogen werden;
   - Definieren der Funktion, die den Trend der Werte $y(T)$ als eine Funktion der Temperatur T am besten beschreibt;
   - Ableiten der Temperatur T durch Inversion der Funktion des Trends der Werte von $y(T)$.

2. Kontinuierliches Messverfahren der Temperatur einer industriellen Anlagenfackel nach Anspruch 1, **dadurch gekennzeichnet, dass** es eine Validierungsprozedur umfasst, umfassend die folgenden Schritte:

   - Auswählen von zwei Wellenlängen $\lambda_1$ und $\lambda_2$ in Spektralbereichen, in denen mögliche Verunreinigungen, entstehend aus jeglichen glühenden Komponenten, aus einer möglichen molekularen Emission und aus der Absorption von Wasserdampf, sehr gering oder vernachlässigbar sind;
   - für jede ausgewählte Wellenlänge $\lambda_1$ und $\lambda_2$, Messen der jeweiligen Intensität $J(\lambda_1)_T$ und $J(\lambda_2)_T$, emittiert durch die Quelle, von der die Temperatur evaluiert werden soll, wie durch das verwendete spezifische Messsystem erfasst;
   - Evaluieren der Emissionsintensität an der Mündung der Fackel als das Inverse der Beziehung:

$$J(\lambda)_T = RI(\lambda)T \qquad (4.2)$$

   wobei $R$ die Transferfunktion des verwendeten spezifischen optischen Systems ist;

- Bestimmen der Temperatur mittels der Beziehung:

$$T \approx \frac{hc}{k}\left(\frac{1}{\lambda_1} - \frac{1}{\lambda_2}\right)\left[ln\left(\frac{\lambda_2{}^5}{\lambda_1{}^5}\frac{I(\lambda_2)_T + \delta_2}{I(\lambda_1)_T + \delta_1}\right)\right]^{-1} \qquad (6.1)$$

wobei h die Planck-Konstante ist, c die Lichtgeschwindigkeit ist, k die Boltzmann-Konstante ist und $\delta_1$ und $\delta_2$ jeweils für die ausgewählten Wellenlängen $\lambda_1$ und $\lambda_2$ einen Wert des Anstiegs der Zählungsanzahl darstellt, korrigiert mittels der Transferfunktion der verwendeten spezifischen Messeinrichtung.

3. Kontinuierliches Messverfahren der Temperatur einer industriellen Anlagenfackel nach Ansprüchen 1 und 2 als einen jeweils nach Anspruch 1 und nach Anspruch 2 berechneten arithmetischen Mittelwert der Temperaturwerte.

4. Einrichtung (10) zur kontinuierlichen Messung der Temperatur einer industriellen Anlagen- oder Raffineriefackel nach dem Verfahren von Ansprüchen 1-3, umfassend ein optisches Kopplungssystem (11), d. h. ein Linsen- und/oder Spiegelsystem und optische Faserkabel und einen mit einem Multikanaldetektor bereitgestellten spektroskopischem Analysegerät, sowie einen elektronischer Prozessor (14), der zur Verwaltung der Datenerfassungsprozeduren und zur Speicherung und Übertragung derselben in Verbindung mit dem spektroskopischen Analysegerät geeignet ist, um den Durchgang von Daten zu ermöglichen, wobei der Prozessor die Einrichtung veranlasst, die Schritte des Verfahrens nach Anspruch 1 auszuführen.

5. Einrichtung (10) zur kontinuierlichen Messung der Temperatur einer industriellen Fackel nach Anspruch 4, **dadurch gekennzeichnet, dass** das optische Kopplungssystem (11) aus einer Erfassungsoptik besteht, die das Bild der Flamme (12) der Fackel, vorher mit einem Hochpassfilter bearbeitet, an der numerischen Öffnung des spektroskopischen Analysegeräts, das an der fokalen Ausgabeebene mit dem Multikanaldetektor ausgestattet ist, koppelt.

6. Einrichtung (10) zur kontinuierlichen Messung der Temperatur einer industriellen Fackel nach einem der Ansprüche 4-5, **dadurch gekennzeichnet, dass** sie einen Laserpointer und eine Kamera umfasst, die geeignet sind, die Ausrichtung des optischen Kopplungssystems (11) mit dem spektroskopischen Analysegerät zu erleichtern und Spektralinformationen mit dem realen Bild zu integrieren.

**Revendications**

1. Procédé de mesure continue de la température d'une torche d'installation industrielle, comprenant les étapes suivantes :

- la sélection de trois longueurs d'onde $\lambda_1$, $\lambda_2$ et $\lambda_3$, dans lequel $\lambda_3 > \lambda_2 > \lambda_1$, dans des régions spectrales où une contamination possible résultant de n'importe quels composants incandescents, provenant d'une émission moléculaire possible et provenant de l'absorption de vapeur d'eau, est très faible ou négligeable ;
- pour chaque longueur d'onde $\lambda_1$, $\lambda_2$ et $\lambda_3$ sélectionnée, la mesure de l'intensité respective $J(\lambda_3)_T J(\lambda_2)_T e J(\lambda_1)_T$ émise par une source étalonnée ayant une température connue, selon la relation

$$J(\lambda)_{Tcal} = R.I(\lambda)_{Tcal} \qquad (4.5)$$

dans laquelle $J(\lambda)_{Tcal}$ représente la distribution de l'intensité de la source étalonnée à la température connue quand elle est collectée par le système de mesure spécifique utilisé, $R$ la fonction de transfert du système optique spécifique utilisé et $I(\lambda)_{TCal}$ la courbe d'émission de Planck théorique de la source étalonnée ;
- la reconstruction de la réponse spectrale du système de mesure spécifique pour n'importe quelle température T d'une source à mesurer, au moyen de la relation :

$$J(\lambda)_T = J(\lambda)_{Tcal}\frac{I(\lambda)_T}{I(\lambda)_{Tcal}} = RI(\lambda)_T \qquad (4.6)$$

- la définition de la relation, en fonction de la température :

$$f(T) = \left( \frac{J(\lambda_1) - J(\lambda_2)}{J(\lambda_1) - J(\lambda_3)} \right)_T \qquad (4.7)$$

- la définition de la fonction

$$y(T) = f(T) - f(T_0) \qquad (4.8)$$

dans laquelle les valeurs de $f(T)$ sont déduites à partir des spectres reconstruits au moyen de la relation (4.6) :
- la définition de la fonction qui décrit le mieux la tendance des valeurs $y(T)$ en fonction de la température T ;
- l'obtention de la température T par l'inversion de la fonction de la tendance des valeurs de $y(T)$.

2. Procédé de mesure continue de la température d'une torche d'installation industrielle selon la revendication 1, **caractérisé en ce qu'**il comprend une procédure de validation, comprenant les étapes suivantes :

- la sélection de deux longueurs d'onde $\lambda_1$ et $\lambda_2$, dans des régions spectrales où une contamination possible résultant de n'importe quels composants incandescents, provenant d'une émission moléculaire possible et provenant de l'absorption de vapeur d'eau, est très faible ou négligeable ;
- pour chaque longueur d'onde $\lambda_1$ et $\lambda_2$ sélectionnée, la mesure de l'intensité respective $J(\lambda_1)_T$ et $J(\lambda_2)_T$ émise par la source dont la température doit être évaluée, telle que collectée par le système de mesure spécifique utilisé ;
- l'évaluation de l'intensité de l'émission au niveau de la bouche de la torche, sous la forme de l'inverse de la relation :

$$J(\lambda)_T = RI(\lambda)_T \qquad (4.2)$$

dans laquelle $R$ est la fonction de transfert du système optique spécifique utilisé ;
- la détermination de la température au moyenne de la relation :

$$T \approx \frac{hc}{k} \left( \frac{1}{\lambda_1} - \frac{1}{\lambda_2} \right) \left[ ln \left( \frac{\lambda_2^{\,5} I(\lambda_2)_T + \delta_2}{\lambda_1^{\,5} I(\lambda_1)_T + \delta_1} \right) \right]^{-1} \qquad (6.1)$$

dans laquelle h est la constante de Planck, c est la vitesse de la lumière, k est la constante de Boltzmann et $\delta_1$ et $\delta_2$ représentent une valeur de l'augmentation du nombre de coups, respectivement pour les longueurs d'onde $\lambda_1$ et $\lambda_2$ sélectionnées, corrigées au moyen de la fonction de transfert de l'appareil de mesure spécifique utilisé.

3. Procédé de mesure continue de la température d'une torche d'installation industrielle selon les revendications 1 et 2, sous la forme d'une moyenne arithmétique des valeurs de température calculées respectivement selon la revendication 1 et la revendication 2.

4. Appareil (10) pour la mesure continue de la température d'une torche d'installation industrielle ou de raffinerie selon le procédé des revendications 1 à 3, comprenant un système de couplage optique (11), c'est-à-dire un système de lentilles et/ou de miroirs et de câbles de fibre optique, et un analyseur spectroscopique pourvu d'un détecteur à plusieurs canaux, ainsi qu'un processeur électronique (14), apte à la gestion des procédures d'acquisition de données et au stockage et à la transmission de celles-ci, en connexion avec ledit analyseur spectroscopique pour permettre le passage de données, dans lequel le processeur amène l'appareil à mettre en œuvre les étapes du procédé selon la revendication 1.

5. Appareil (10) pour la mesure continue de la température d'une torche industrielle selon la revendication 4, **caractérisé en ce que** le système de couplage optique (11) consiste en une optique de collecte couplant l'image de la flamme (12) de la torche, précédemment traitée avec un filtre passe-haut, au niveau de l'ouverture numérique dudit analyseur spectroscopique, équipé avec ledit détecteur à plusieurs canaux au niveau du plan focal de sortie.

6. Appareil (10) pour la mesure continue de la température d'une torche industrielle selon l'une quelconque des revendications 4 et 5, **caractérisé en ce qu'**il comprend un pointeur laser et une caméra aptes à faciliter l'alignement dudit système de couplage optique (11) avec ledit analyseur spectroscopique et à intégrer des informations spectrales avec l'image réelle.

Fig. 1

Fig. 2

Fig. 3

Fig. 4

Transmission   Air transmission

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

**Controls**

⊞ 10 ⊟  Spectre n°

⊞ 50 ⊟  Int. time (ms)

⊞ 400 ⊟  Discrim.

⊞ 80 ⊟  Corrisp.

⊞ 60 ⊟  Ref. time

⊞ 400 ⊟  Threshold

Enable controls
************

Fig. 30

Report n° 5                    Issued in data: 05/05/20xx

Torch: NORTH                 Measurement day: 29/04/20xx

Comments:

| Time (sec) | Medium Temp. (K) | Minimum Temp. (K) | Black body emissions (% of surveys) | Molecular Emissions (% of surveys) | Minimum temperature (black body + molecular) | Recording date time dd/mm/yyyy |
|---|---|---|---|---|---|---|
| 0 | NaN | NaN | 0 | 52 | 1800 | 29/04/ 20xx 23:16:35 |
| 60.00443 | NaN | NaN | 0 | 55 | 1800 | 29/04/ 20xx 23:17:35 |
| 120.0079 | NaN | NaN | 0 | 68 | 1800 | 29/04/ 20xx 23:18:35 |
| 180.0123 | NaN | NaN | 0 | 90 | 1800 | 29/04/ 20xx 23:19:35 |
| 240.0187 | NaN | NaN | 0 | 65 | 1800 | 29/04/ 20xx 23:20:35 |
| 300.0222 | NaN | NaN | 0 | 73 | 1800 | 29/04/ 20xx 23:21:35 |
| 360.0286 | NaN | NaN | 0 | 88 | 1800 | 29/04/ 20xx 23:22:35 |
| 420.034 | NaN | NaN | 0 | 92 | 1800 | 29/04/ 20xx 23:23:35 |
| 480.0395 | 1446 | 1391 | 3 | 82 | 1391 | 29/04/ 20xx 23:24:35 |
| 540.0429 | 1459 | 1459 | 2 | 90 | 1459 | 29/04/ 20xx 23:25:35 |
| 600.0463 | NaN | NaN | 0 | 100 | 1800 | 29/04/ 20xx 23:26:35 |
| 660.0518 | NaN | NaN | 0 | 100 | 1800 | 29/04/ 20xx 23:27:35 |
| 720.0562 | 1442 | 1378 | 8 | 80 | 1378 | 29/04/ 20xx 23:28:35 |
| 780.0596 | 1450 | 1369 | 40 | 28 | 1369 | 29/04/ 20xx 23:29:35 |
| 840.067 | 1423 | 1304 | 42 | 37 | 1304 | 29/04/ 20xx 23:30:35 |
| 900.0715 | 1383 | 1383 | 2 | 97 | 1383 | 29/04/ 20xx 23:31:35 |
| 960.0759 | NaN | NaN | 0 | 98 | 1800 | 29/04/ 20xx 23:32:35 |
| 1020.08 | NaN | NaN | 0 | 100 | 1800 | 29/04/ 20xx 23:33:35 |
| 1080.086 | NaN | NaN | 0 | 98 | 1800 | 29/04/ 20xx 23:34:35 |

## Fig. 31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5225883 A
- EP 0168235 A2
- WO 9318494 A1
- EP 0129150 A2

**Non-patent literature cited in the description**

- *Applied Optics,* 1984, vol. 23, 1853-61
- **J.S. KIM ; M.A. CAPELLI.** *J. Appl.Phys.,* 1988, vol. 84, 4595
- **D. CARINHANA et al.** *J. Braz. Chem. Soc.,* 2008, vol. 19, 1326
- **J.S. KIM ; M.A. HAIR.** *J. Appl.Phys.,* 1988, vol. 84, 4595
- **D. CARINHANA et al.** *J. Braz. Chem. Soc,* 2008, vol. 19, 1326